# EUROPEAN PATENT APPLICATION

(11) **EP 2 322 682 A1**
(43) Date of publication of application: **18.05.2011**
(21) Application number: 09794563.8
(22) Date of filing: 27.02.2009
(51) Int. Cl.: C22F 3/02, C22F 1/06

(54) **METHOD FOR IMPROVING FORMABILITY OF MAGNESIUM ALLOY**

(30) Priority: 08.07.2008 KR 20080066067; 30.12.2008 KR 20080137408
(71) Applicant: SNU R&DB Foundation, Gwanak-gu Seoul 151-015 (KR)
(72) Inventor: HAN, Heung Nam, Seoul 151-818 (KR); OH, Kyu Hwan, Seoul 137-040 (KR); JOO, Young-Chang, Seoul 135-280 (KR); HA, Seok-Jun, Seoul 151-778 (KR); HONG, SeungHee, Seoul 140-751 (KR); KIM, Se-Jong, Pohang-si Gyeongsangbuk-do 790-390 (KR); SUH, Jeong, Busan 614-778 (KR); KIM, Jeng-O, Daejeon 301-212 (KR); KANG, Hee-Shin, Daejeon 305-755 (KR)
(74) Representative: Samson & Partner
(86) International application number: PCT/KR2009/000980
(87) International publication number: WO 2010/005157

(57) **Abstract**

A method for increasing the formability of a magnesium alloy is disclosed. The method for increasing the formability of the magnesium alloy in accordance with the present invention controls a texture of the magnesium alloy by supplying a high energy to a surface of the magnesium alloy by irradiating a laser.

## Description

### Technical Field

The present invention relates to a method for increasing the formability of a magnesium alloy. More particularly, the present invention relates to a method for increasing the formability of the magnesium alloy, which controls a texture of the magnesium alloy by supplying a high energy to a surface of the magnesium alloy by irradiating a laser.

### Background Art

Since magnesium alloys have relatively low density compared to other materials, exhibit excellent fatigue and impact properties at a high temperature, are superior in electrical conductivity, thermal conductivity, etc., and have a prominent electromagnetic wave shielding effect, they can satisfy overall physical properties required in various industries and hence their industrial applicability is quite high. In fact, due to the aforementioned advantages, the necessity of magnesium alloys is recently increasing in the fields of automobile, aircraft, defense industry and so on.

### Disclosure

### Technical Problem

However, magnesium alloys do not have sufficient slip systems because of their hexagonal close-packed (HCP) structures, and therefore their formability or processability is not that high.

As magnesium alloys have to be excellent in formability, as well as in heat resistance and corrosion resistance, in order to utilize magnesium alloys in various industries, studies on increasing the formability of magnesium alloys have been actively under way.

One example of the technique for increasing the formability of a magnesium alloy is disclosed in Korean Patent Laid-Open Publication No. 2005-24735 (Laid-Open Publication Date: March 11, 2005). The above patent laid-open publication discloses an equal channel angular pressing (ECAP) method for reducing a (0002) basal plane texture by carrying out extreme shear deformation at ambient temperature. This method has the advantage of obtaining a shear texture, which cannot be obtained in a typical rolling process, by repetitively carrying out strong shear deformation while passing a bulk material through a bent die channel without change in cross section area thereof, but has problem that this method is difficult to be applied in mass-production line for manufacturing a magnesium alloy sheet.

Additionally, another example of the technique for increasing the formability of a magnesium alloy is disclosed in Korean Patent Laid-Open Publication No. 2007-107833 (Laid-Open Publication Date: November 8, 2007). The above laid-open publication discloses a method for producing magnesium alloy by hot rolling through a twin roll to which shear deformation is applied. This method performs a number of hot rolling steps on slab-shaped magnesium ingots under mushy state through the twin roll, keeps the lower roll in an idle state so as to carry out shear deformation on the magnesium ingots between the hot rolling steps, and drives the lower roll in the final hot rolling step to attain plane deformation. According to this method, although the formability of the magnesium alloy can be increased by a reduction in the (0002) basal plane texture, there is a limitation in that this method can be applied only to slab-shaped material.

Consequently, with the increase in formability (processability), the necessity of development of magnesium alloy capable of being formed (processed) into various shapes is becoming more prevalent.

### Technical Solution

It is, therefore, an object of the present invention to provide a method for increasing the formability of a magnesium alloy, which controls a texture of the magnesium alloy by supplying a high energy to a surface of the magnesium alloy by irradiating a laser.

### Advantageous Effects

In accordance with the present invention, there is an effect of increasing the formability of a magnesium alloy in a manner of controlling a texture of the magnesium alloy by supplying a high energy to a surface of the magnesium alloy with a laser.

In addition, in accordance with the present invention, there is an effect of obtaining a non-oriented texture that is capable of increasing the formability of a magnesium alloy by supplying a high energy to a surface of the magnesium alloy with a laser, and removing a (0002) basal plane texture which causes deterioration of the formability of the magnesium alloy.

Further, in accordance with the present invention, there is an effect of increasing the formability of a magnesium alloy having various shapes including ones with complex shape or small thickness, as well as typical construction materials or exterior cladding materials.

### Description of Drawings

The above and other objects and features of the present invention will become apparent from the following description of the preferred embodiments given in conjunction with the accompanying drawings, in which:
Fig. 1 is a view conceptually showing a method for increasing the formability of a magnesium alloy in accordance with one embodiment of the present invention;
Fig. 2 is a view showing the microstructure of AZ31B H24 magnesium alloy to which Nd:YAG laser is irradiated in accordance with a first embodiment of the present invention;
Fig. 3 is an electron back-scattered diffraction (EBSD) pattern showing the crystal orientation of AZ31B H24 magnesium alloy to which Nd:YAG laser is irradiated in accordance with the first embodiment of the present invention;
Fig. 4 is a pole figure showing the crystal orientation of AZ31B H24 magnesium alloy to which Ytterbium fiber laser is irradiated in accordance with a second embodiment of the present invention;
Fig. 5 is an inverse pole figure of the (0002) basal plane texture of AZ31B H24 magnesium alloy to which Ytterbium fiber laser is irradiated in accordance with the second embodiment of the present invention;
Fig. 6 is a view showing the dimensions of a tensile specimen of the magnesium alloy fabricated in accordance with the second embodiment of the present invention; and
Figs. 7 to 9 are views showing the results of a tensile test on the tensile specimen of Fig. 6.

### Best Mode for the Invention

In accordance with the present invention, there is provided a method for increasing the formability of a magnesium alloy, the method comprises controlling a texture of the magnesium alloy by supplying an energy to a surface of the magnesium alloy.

The energy can be supplied in a manner that a laser is irradiated to the surface of the magnesium alloy.

The laser can be an Nd:YAG laser.

The laser can be an Ytterbium fiber laser.

The laser can be a pulsed wave laser or a continuous wave laser.

The laser can be irradiated in a defocused state.

A part of the magnesium alloy can be melted by supplying the energy.

A (0002) basal plane texture of the magnesium alloy can be reduced by supplying the energy.

A non-oriented texture of the magnesium alloy can be formed by supplying the energy.

Before supplying the energy, the magnesium alloy can be cold-rolled.

Before supplying the energy, the magnesium alloy can be hot-rolled.

After supplying the energy, the magnesium alloy can be annealed.

The energy can be supplied to the surface of the magnesium alloy by performing a rapid thermal treatment.

The energy can be supplied to the surface of the magnesium alloy by performing a plasma treatment.

### Mode for the Invention

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different from one another, are not necessarily mutually exclusive. For example, a particular feature, structure, or characteristic described herein in connection with one embodiment may be implemented within other embodiments without departing from the spirit and scope of the present invention. Also, it should be understood that the positions or arrangements of individual elements in the embodiment may be changed without separating the spirit and scope of the present invention. The following detailed description is, therefore, not to be taken in a limiting sense, and the scope of the present invention is defined only by the appended claims that should be appropriately interpreted along with the full range of equivalents to which the claims are entitled. In the drawings, like reference numerals denote like or similar elements or functions through the several views.

Hereinafter, the configuration of the present invention will be described in detail with reference to the accompanying drawings.

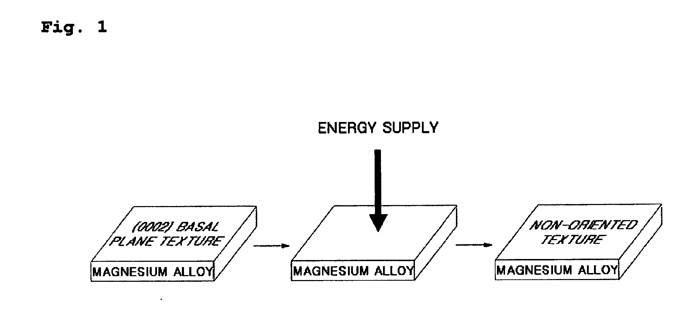

Fig. 1 is a view conceptually showing a method for increasing the formability of a magnesium alloy in accordance with one embodiment of the present invention.

Generally, since only a basal plane slip occurs mostly in a region in which a (0002) basal plane texture is developed in the magnesium alloy, plastic deformation does not easily occur in a formation process, thereby reducing the formability of the magnesium alloy in which the (0002) basal plane texture is developed. On the contrary, if the development of the (0002) basal plane texture is suppressed, or further the (0002) basal texture is transformed into a non-oriented texture, a non-basal plane slip occurs more frequently in addition to the basal plane slip, thus making it easier to cause plastic deformation. Therefore, the formability of the magnesium alloy is greatly improved.

Referring to Fig. 1, the present invention is characterized in that a high energy satisfying a specific condition is supplied to a surface of the magnesium alloy to melt a part of the magnesium alloy and the melted part is back coagulated, thus reducing the (0002) basal plane texture of the magnesium alloy.

In accordance with one embodiment of the present invention, it is possible to control the texture of the magnesium alloy by irradiating a laser having energy of a predetermined level in a manner that high energy is supplied to a surface of the magnesium alloy. Specifically, as the laser-irradiated region of the magnesium alloy is melted and cooled, the development of the (0002) basal plane texture of the magnesium alloy is suppressed or the (0002) basal plane texture is reduced. Further, the magnesium alloy having a non-oriented texture can be obtained, thereby finally promoting the formability of the magnesium alloy.

In accordance with one embodiment of the present invention, the laser may include a pulsed wave laser and a continuous wave laser depending on its operation mode, and the laser may include a gas laser, a solid-state laser, a dye laser, and a free electron laser depending on its energy source. Examples of the laser may include a pulsed wave Nd:YAG laser, a continuous wave Ytterbium fiber laser, and so on. The laser is not necessarily restricted to the above examples, but any laser capable of controlling the texture of the magnesium alloy may be included in the laser of the present invention.

Alternatively, in accordance with the present invention, a laser may be irradiated to the magnesium alloy in a defocused state. Here, a laser defocusing refers to the action of controlling a focal point of the laser so as to be formed not on a surface of the magnesium alloy but on an inside or outside of the magnesium alloy. If the laser is irradiated on the surface of the magnesium alloy in the defocused state, an irradiation range (irradiation area, irradiation depth, etc.) of the laser on the magnesium alloy and an irradiation intensity can be adjusted, thus preventing a local melting of the magnesium alloy, and controlling a melting range (melting area, melting depth, etc.) and a melting degree of the magnesium alloy more precisely.

Generally, a laser has a fast operating speed and can precisely control an irradiated region, and can easily increase an energy density of an irradiated region by locally focusing a laser beam onto a narrow region. Therefore, the method for increasing the formability of the magnesium alloy in accordance with one embodiment of the present invention can be accurately and easily performed compared to a conventional complicated heat treatment process, and further can be effectively utilized as a method for increasing the formability of slab-shaped magnesium alloy with small thickness and magnesium alloy material of various shapes.

Also, in accordance with a preferred embodiment of the present invention, after hot rolling is performed on the magnesium alloy, a laser may be irradiated onto a surface of the hot-rolled magnesium alloy. By irradiating the laser onto the magnesium alloy after hot rolling, the formability of the magnesium alloy can be further enhanced.

In addition, in accordance with a preferred embodiment of the present invention, after cold rolling is performed on the magnesium alloy, a laser may be irradiated onto a surface of the cold-rolled magnesium alloy. By irradiating the laser onto the magnesium alloy after cold rolling, the formability of the magnesium alloy can be further enhanced.

In addition, in accordance with a preferred embodiment of the present invention, after a laser is irradiated on a surface of the magnesium alloy, an annealing may be performed on the magnesium alloy. By annealing the magnesium alloy after the irradiation of the laser, a non-oriented texture formed on the surface of the magnesium alloy extends inside the magnesium alloy, thereby further enhancing the formability of the magnesium alloy.

As described above, the laser irradiation process can be sufficiently applied to mass-production line for manufacturing magnesium alloy sheet, including hot rolling, cold rolling, and annealing steps.

Although the above description has been made with respect to an example in which the laser is irradiated in order to supply high energy to the surface of the magnesium alloy, the present invention is not necessarily restricted thereto. Accordingly, the present invention can include a method of performing a rapid thermal treatment on the surface of the magnesium alloy, and a method of performing a plasma treatment on the surface of the magnesium alloy, in addition to the above laser irradiation, in order to supply high energy to the magnesium alloy.

In a case where the aforementioned rapid thermal treatment and plasma treatment are applied, like the laser irradiation, it is also possible to suppress the (0002) basal plane texture or obtain the non-oriented texture by melting a part of the magnesium alloy. Also, the rapid thermal treatment and the plasma treatment can be also sufficiently applied to mass-production line for manufacturing magnesium alloy sheet, including hot rolling, cold rolling, and annealing steps.

Hereinafter, the process of controlling the texture of the magnesium alloy and increasing the formability thereof by irradiating the laser to the magnesium alloy in accordance with one embodiment of the present invention will be described in detail.

### (First Embodiment)

In the first embodiment of the present invention, a pulsed wave Nd:YAG laser was irradiated onto a magnesium alloy, and then a microstructure of the laser-irradiated region was observed to check a change in a texture of the magnesium alloy caused by laser irradiation.

In this embodiment, AZ31B H24 magnesium alloy having a composition of 95.77 wt% magnesium, 3.27 wt% aluminum, and 0.96 wt% zinc was used, and the pulsed wave Nd:YAG laser manufactured by Miyachi Technos Corporation was used. In this embodiment, the laser wavelength was 1,064 nm, the laser maximum electric power (peak power) was 4 kW, the laser beam diameter was 3 nm, and the laser irradiation time was 20 msec.

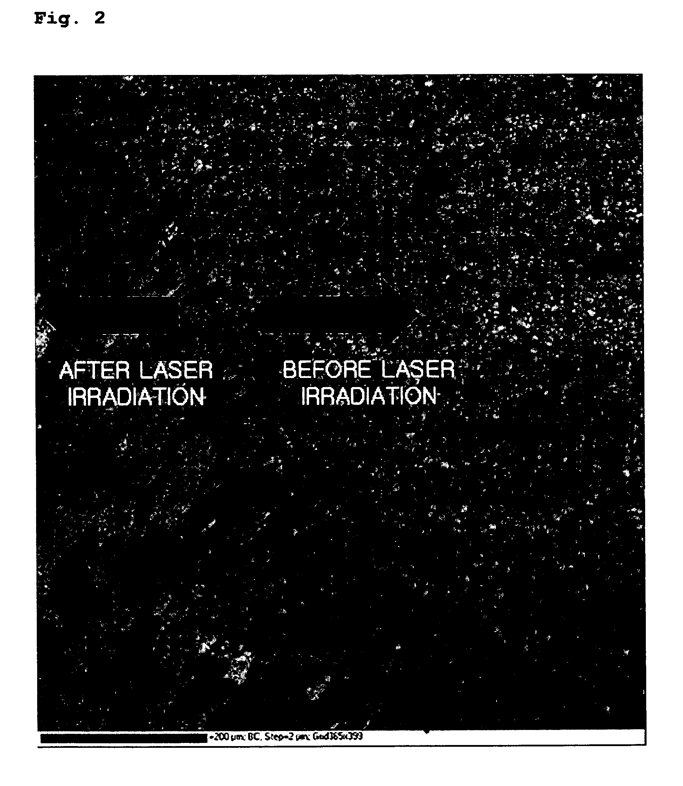

Fig. 2 is a view showing the microstructure of AZ31B H24 magnesium alloy to which Nd:YAG laser is irradiated in accordance with the first embodiment of the present invention. In Fig. 2, the right upper portion with respect to the red solid line represents a portion where no laser is irradiated, and the left lower portion with respect to the red solid line represents a portion where the laser is irradiated.

Referring to Fig. 2, it can be seen that the grain size of the laser-irradiated portion showed a sharp increase compared to the grain size of the non-laser-irradiated portion. Such a change in the microstructure of the magnesium alloy is caused through melting and cooling steps using laser irradiation.

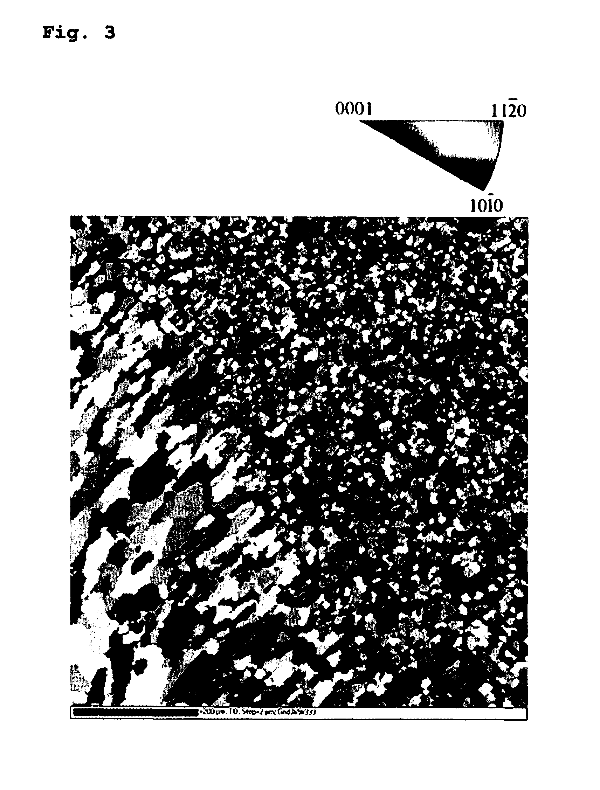

Fig. 3 is an electron back-scattered diffraction (EBSD) pattern showing the crystal orientation in ND (Normal Direction) of AZ31B H24 magnesium alloy having the microstructure shown in Fig. 2.

In Fig. 3, a region corresponding to the right upper portion with respect to the red solid line of Fig. 2 represents a portion where no laser is irradiated as in Fig. 2, and a region corresponding to the left lower portion with respect to the red solid line represents a portion where the laser is irradiated as in Fig. 2. Also, the portion indicated in red in Fig. 3 shows that the magnesium alloy has a texture with {0001} crystal orientation (see the chromaticity coordinate of Fig. 3).

Referring to Fig. 3, it can be seen that most part of the magnesium alloy to which no laser is irradiated is indicated in red, and hence shows a substantial microstructure of the texture with {0001} crystal orientation, while the magnesium alloy to which the laser is irradiated shows a relatively small portion indicated in red and is indicated in various colors other than red, and hence shows a smaller microstructure of the texture with {0001} crystal orientation and an increase in the microstructure with a crystal orientation other than {0001} crystal orientation. Accordingly, it can be found that a (0002) basal plane texture of a magnesium alloy can be significantly reduced by irradiating a laser to the magnesium alloy, and further the (0002) basal plane texture of the magnesium alloy can be transformed into a non-orientated texture thereof.

### (Second Embodiment)

In the second embodiment of the present invention, a pulsed wave Ytterbium fiber laser was irradiated onto a magnesium alloy, and then a microstructure of the laser-irradiated region was observed to check a change in a texture of the magnesium alloy caused by laser irradiation. Also, in the second embodiment of the present invention, the laser-irradiated magnesium alloy was processed to make a tensile specimen, and then a tensile test was performed on the tensile specimen to observe a change in the formability of the magnesium alloy caused by laser irradiation.

In this embodiment, AZ31B H24 magnesium alloy having a composition of 95.77 wt% magnesium, 3.27 wt% aluminum, and 0.96 wt% zinc was used, and the pulsed wave Ytterbium fiber laser (Model name: "YLR-1600") manufactured by IPG Photonics Corporation was used. In this embodiment, the laser wavelength was 1,070 nm, the laser maximum electric power (peak power) was 4 kW, the laser beam diameter was 3 nm, and the laser irradiation time was 20 msec.

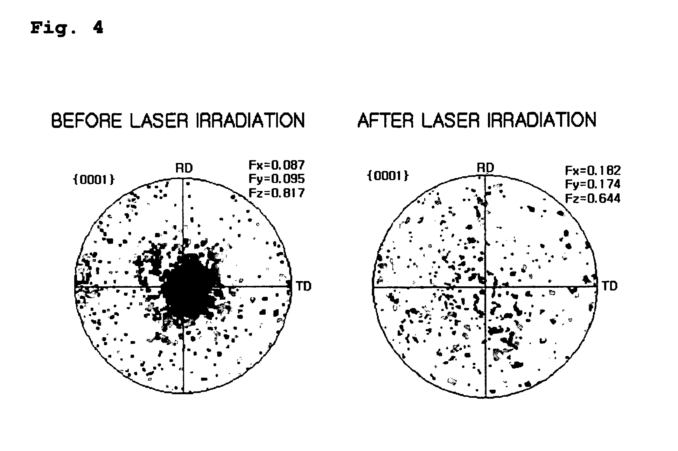

Fig. 4 is a pole figure showing the crystal orientation in ND (normal direction) of AZ31B H24 magnesium alloy to which Ytterbium fiber laser is irradiated in accordance with the second embodiment of the present invention. In Fig. 4, like in Fig 3, a region of the magnesium alloy having a texture with {0001} crystal orientation is also indicated in red.

Referring to Fig. 4, it can be seen that, while the texture with {0001} crystal orientation, i.e., the (0002) basal plane texture, of the magnesium alloy is developed, given that a large amount of red is concentrated on the central part of the pole figure before laser irradiation, the texture with {0001} crystal orientation, i.e., the (0002) basal plane texture, of the magnesium alloy is weakened, given that the amount of red in the pole figure is decreased and the red is distributed over the entire pole figure after laser irradiation. Such a change in the texture is clearly seen, too, in an inverse pole figure of the (0002) basal plane texture of the magnesium alloy to be described later.

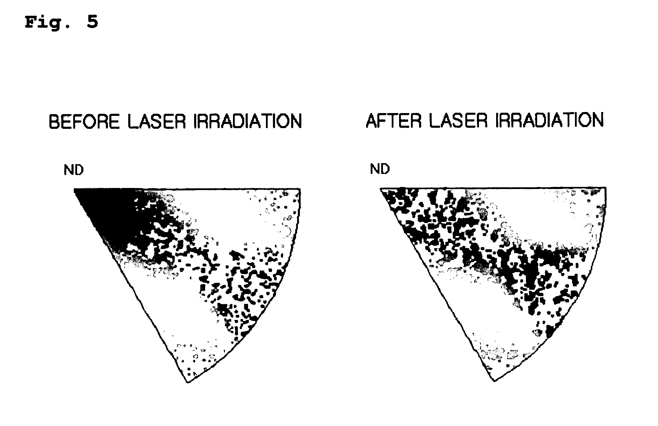

Fig. 5 is an inverse pole figure of the (0002) basal plane texture of AZ31B H24 magnesium alloy to which Ytterbium fiber laser is irradiated in accordance with the second embodiment of the present invention.

Referring to Fig. 5, it can be seen that the red is more widely distributed in the inverse pole figure after laser irradiation. Based on this result, it can be found that the (0002) basal plane texture of the magnesium alloy is significantly weakened due to laser irradiation, and rather, the texture of the magnesium alloy is transformed to a non-oriented one.

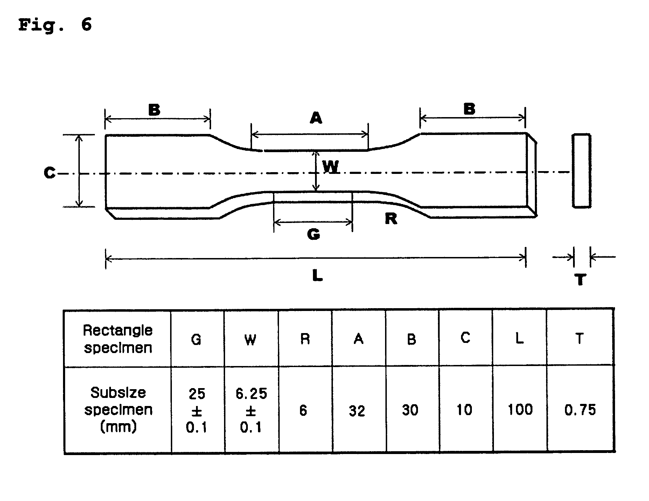

Fig. 6 is a view showing the dimensions of a tensile specimen of the magnesium alloy fabricated in accordance with the second embodiment of the present invention. As shown therein, the tensile specimen of the magnesium alloy fabricated in accordance with this embodiment was processed and fabricated depending on the standards of the American society for testing and materials (ASTM).

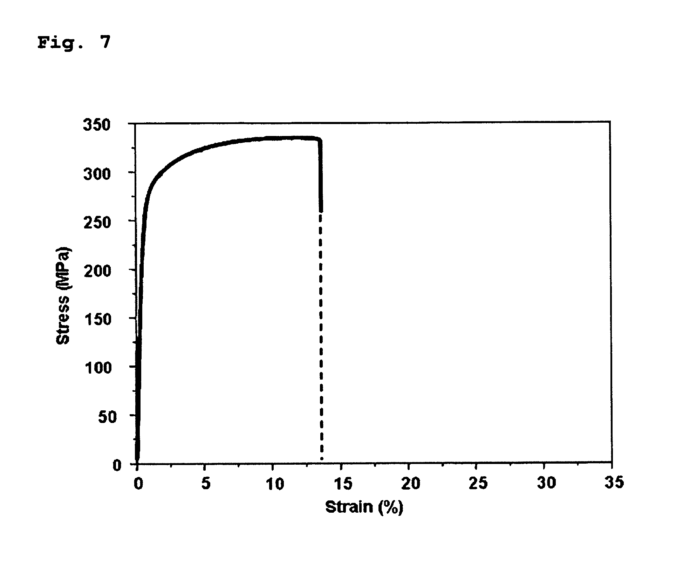

Figs. 7 to 9 are views showing the results of a tensile test on the tensile specimen of Fig. 6.

In this embodiment, the tensile tester (Model name: "5584 Floor Model Frame") manufactured by Instron Corporation was used, and the strain rate was set to 10⁻⁴ sec⁻¹_{.}

Referring to Figs. 7 to 9, it can be seen that there are shown a stress-strain curve and elongation derived from the results of the tensile test on the tensile specimen of the magnesium alloy. Here, the stress-strain curve is a curve which is obtained by measuring a stress applied to the tensile specimen and a strain of the tensile specimen relative to the stress, and the elongation (i.e., strain rate) refers to a numerical value which is obtained by dividing an extended length of the tensile specimen at the fracture point of the stress-strain curve by the initial length of the tensile specimen, which can be used as an index for estimating the formability of the magnesium alloy.

First, referring to the stress-strain curve indicated in black solid line in Fig. 7, the tensile specimen of the magnesium alloy to which no laser is irradiated shows an ultimate tensile strength (UTS) of 334.0 Mpa and an elongation of 13.65 % at the fracture point.

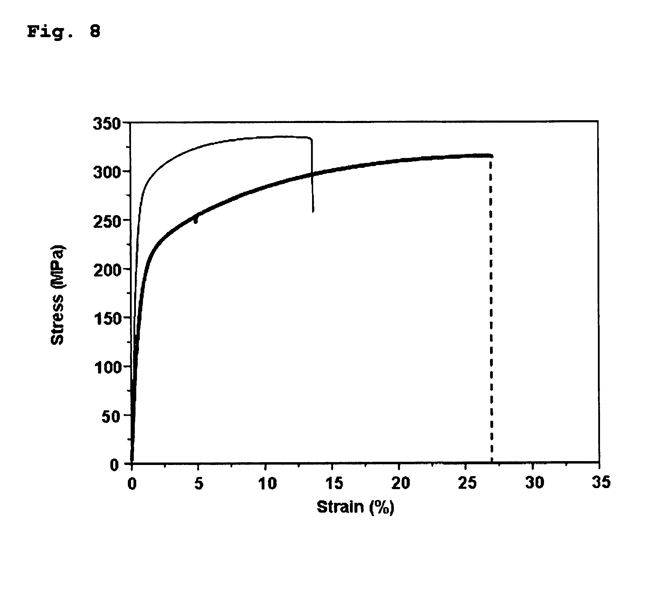

On the other hand, referring to the stress-strain curve indicated in red solid line in Fig. 8, the tensile specimen of the magnesium alloy to which Ytterbium fiber laser is irradiated shows an ultimate tensile strength of 315 MPa and an elongation of 27.07 % at the fracture point. Here, the laser power was set to 350 W and the laser scan speed was set to 25 m/min (under the first irradiation condition of the laser).

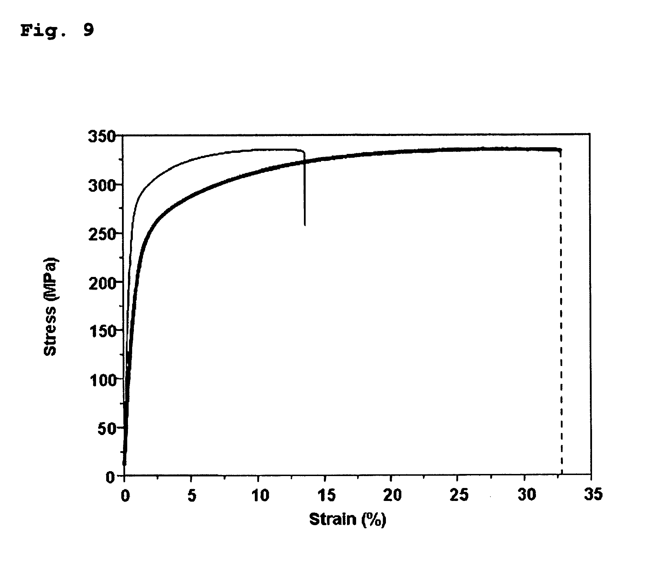

Further, referring to the stress-strain curve indicated in red solid line in Fig. 9, the tensile specimen of the magnesium alloy to which Ytterbium fiber laser is irradiated shows an ultimate tensile strength of 335 MPa and an elongation of 32.90 % at the fracture point. Here, laser power was set to 200 W and the laser scan speed was set to 20 m/min (under the second irradiation condition of the laser).

For reference, in Figs. 8 and 9, the stress-strain curve indicated in black solid line represents a stress-strain curve for the tensile specimen of the magnesium alloy to which no laser is irradiated by way of a comparative example.

According to the results of the tensile test, if the laser is irradiated to the tensile specimen of the magnesium alloy, it can be seen that the formability of the tensile specimen of the magnesium alloy is greatly improved compared to the case where no laser is irradiated. That is, the elongation (27.07 % under the first irradiation condition of the laser and 32.90 % under the second irradiation condition of the laser) of the tensile specimen of the magnesium alloy to which the laser is irradiated is more than twice larger than the elongation (13.65 %) of the tensile specimen of the magnesium alloy to which no laser is irradiated, and therefore it can be seen that the formability of the magnesium alloy is significantly increased by laser irradiation.

Although the present invention has been described with reference to specific details such as concrete components and the limited embodiments and accompanying drawings, these are set forth to provide a more through understanding of the present invention and the present invention is not limited to the above embodiments. It will, however, be appreciated by those skilled in the art that various modifications and changes may be made from the description.

Therefore, the scope of the present invention should not be limited to the above-described embodiments but should be defined by the appended claims and their equivalents.

## Claims

1. A method for increasing the formability of a magnesium alloy, the method comprises controlling a texture of the magnesium alloy by supplying an energy to a surface of the magnesium alloy.

2. The method of claim 1, wherein the energy is supplied in a manner that a laser is irradiated to the surface of the magnesium alloy.

3. The method of claim 2, wherein the laser is an Nd:YAG laser.

4. The method of claim 2, wherein the laser is an Ytterbium fiber laser.

5. The method of claim 2, wherein the laser is a pulsed wave laser or a continuous wave laser.

6. The method of claim 2, wherein the laser is irradiated in a defocused state.

7. The method of claim 1, wherein a part of the magnesium alloy is melted by supplying the energy.

8. The method of claim 1, wherein a (0002) basal plane texture of the magnesium alloy is reduced by supplying the energy.

9. The method of claim 1, wherein a non-oriented texture of the magnesium alloy is formed by supplying the energy.

10. The method of claim 1, wherein, before supplying the energy, the magnesium alloy is cold-rolled.

11. The method of claim 1, wherein, before supplying the energy, the magnesium alloy is hot-rolled.

12. The method of claim 1, wherein, after supplying the energy, the magnesium alloy is annealed.

13. The method of claim 1, wherein the energy is supplied to the surface of the magnesium alloy by performing a rapid thermal treatment.

14. The method of claim 1, wherein the energy is supplied to the surface of the magnesium alloy by performing a plasma treatment.
